# EUROPEAN PATENT APPLICATION

(11) **EP 4 782 917 A1**
(43) Date of publication of application: **29.07.2026**
(21) Application number: 26153631.2
(22) Date of filing: 22.01.2026
(51) Int. Cl.: G03B 21/20, G02B 5/02, G02B 26/08, G02B 27/09, G02B 27/10, G02B 27/28, G03B 33/08, G03B 33/12, H04N 9/31, G03B 21/00

(54) **PROJECTOR**

(30) Priority: 24.01.2025 JP 2025010384
(71) Applicant: Seiko Epson Corporation, Tokyo 160-8801 (JP)
(72) Inventor: YONEYAMA, Takuo, Suwa-shi, 392-8502 (JP)
(74) Representative: Lewis Silkin LLP

(57) **Abstract**

A projector according to an aspect of the present disclosure includes a light source configured to output illumination light containing first color light and second color light, a light combiner, a light modulator configured to modulate light incident from the light combiner to generate image modulated light, a light separator configured to separate the image modulated light into image generating light and image non-generating light, an image forming unit configured to modulate the image generating light to generate image light, a projection optical apparatus configured to project the image light, a light guide system configured to guide the image non-generating light to the light combiner, and a polarization converter disposed in an optical path between the light combiner and the light modulator and configured to align polarization directions of the light incident from the light combiner, the illumination light output from the light source being light polarized in a first polarization direction with respect to the light combiner, the image non-generating light caused to be incident on the light combiner by the light guide system being light polarized in a second polarization direction perpendicular to the first polarization direction with respect to the light combiner, being combined with the illumination light at the light combiner, and being caused to be incident on the light modulator.

## Description

The present application is based on, and claims priority from JP Application Serial Number 2025-010384, filed January 24, 2025, the disclosure of which is hereby incorporated by reference herein in its entirety.

### BACKGROUND

### 1. Technical Field

The present disclosure relates to a projector.

### 2. Related Art

There is a projection system of related art in which the optical intensity of illumination light with which a display element is illuminated is increased or decreased by using a diffraction pattern such as a computer-generated hologram displayed on a spatial light modulator in accordance with the brightness of an input video (see WO 2019/215202 described below, for example). In the projection system, light incident on dark gradation pixels that constitute an image is decreased, and light incident on bright gradation pixels that constitute the image is increased.

WO 2019/215202 is an example of the related art.

However, since the spatial light modulator used in the projection system described above uses diffraction of light, the spatial light modulator needs to have pixels the size of each of which is comparable to the wavelength of the light and the number of which is determined in accordance with the resolution of an illumination pattern, and an enormous amount of calculation is required to create a computer-generated hologram, so that there are problems such as an increase in size of the projection system and an increase in cost thereof. Furthermore, zero-order light, a high-order diffraction image, and the like cause a diffraction loss, which causes another problem of a decrease in light use efficiency.

### SUMMARY

According to a first aspect of the present disclosure, there is provided a projector including: a light source configured to output illumination light containing first color light in a first wavelength band and second color light in a second wavelength band different from the first wavelength band; a light combiner onto which the illumination light output from the light source is incident; a light modulator configured to modulate light incident from the light combiner to generate image modulated light; a light separator configured to separate the image modulated light incident from the light modulator into image generating light used to generate an image and image non-generating light not used to generate the image; an image forming unit configured to modulate the image generating light incident from the light separator to generate image light; a projection optical apparatus configured to project the image light incident from the image forming unit; a light guide system configured to guide the image non-generating light incident from the light separator to the light combiner; and a polarization converter disposed in an optical path between the light combiner and the light modulator and configured to align polarization directions of the light incident from the light combiner, the illumination light output from the light source being light polarized in a first polarization direction with respect to the light combiner, and the image non-generating light caused to be incident on the light combiner by the light guide system being light polarized in a second polarization direction perpendicular to the first polarization direction with respect to the light combiner, being combined with the illumination light incident from the light source at the light combiner, and being caused to be incident on the light modulator.

### BRIEF DESCRIPTION OF THE DRAWINGS

FIG. 1 is a schematic view showing the configuration of a projector according to a first embodiment.
FIG. 2 shows the configuration of key parts of a projector according to a first modification.
FIG. 3 is a schematic view showing the configuration of a projector according to a second embodiment.
FIG. 4 shows the configuration of key parts of a projector according to a second modification.
FIG. 5 is a schematic view showing the configuration of a projector according to a third embodiment.
FIG. 6 shows the configuration of key parts of a projector according to a third modification.
FIG. 7 is a schematic view showing the configuration of a projector according to a fourth embodiment.
FIG. 8 shows the configuration of key parts of a projector according to a fourth modification.

### DESCRIPTION OF EMBODIMENTS

Embodiments of the present disclosure will be described below with reference to the drawings. In the drawings, elements are each drawn at a dimensional scale changed from the actual value in some cases for clarity of the element.

### First embodiment

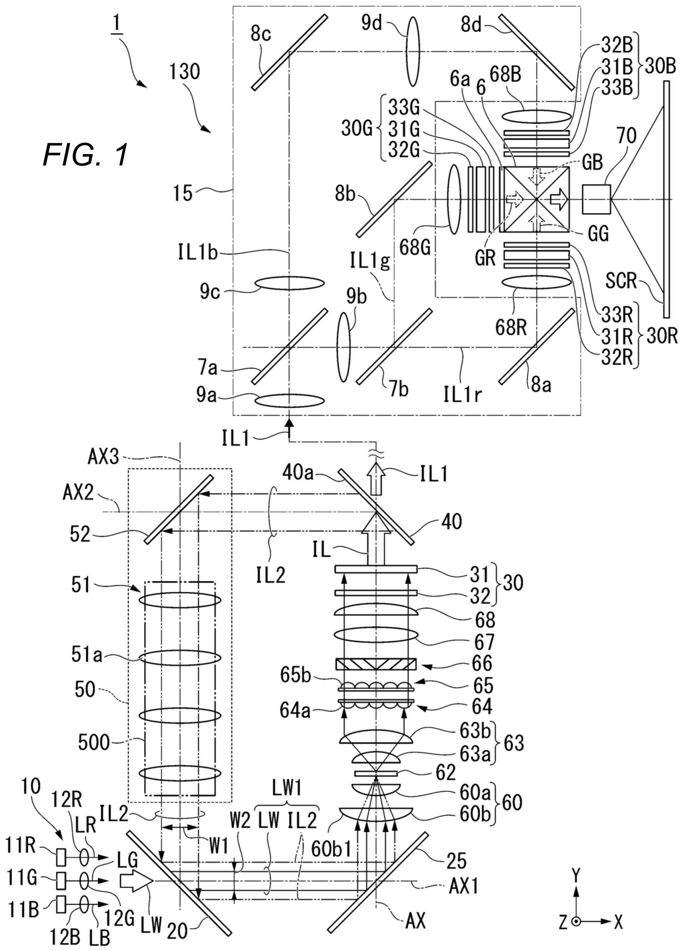

A projector according to a first embodiment of the present disclosure will first be described with reference to FIG. 1. FIG. 1 is a schematic view showing the configuration of a projector 1 according to the first embodiment.

In the following description, an XYZ coordinate system is used in some cases to describe the arrangement of members of the projector 1. In the present specification, it is assumed that an X-axis is an axis along the optical axis of illumination light LW output from a light source 10, a Y-axis is an axis along the direction in which the projector 1 projects an image, and a Z-axis is an axis orthogonal to the X-axis and the Y-axis.

The projector 1 includes the light source 10, a light combiner 20, a deflector 25, a light modulator 30, a light separator 40, an image forming unit 130, a light guide system 50, a first optical system 60, a diffuser 62, a second optical system 63, a first lens array 64, a second lens array 65, a polarization converter 66, a superimposing lens 67, and a projection optical apparatus 70, as shown in FIG. 1.

The projector 1 according to the present embodiment has an illumination optical axis AX, a first optical axis AX1, a second optical axis AX2, and a third optical axis AX3. The light source 10, the light combiner 20, and the deflector 25 are arranged on the first optical axis AX1. The deflector 25, the first optical system 60, the diffuser 62, the second optical system 63, the first lens array 64, the second lens array 65, the polarization converter 66, the superimposing lens 67, the light modulator 30, the light separator 40, and the image forming unit 130 are arranged on the illumination optical axis AX. That is, the deflector 25, the first optical system 60, the diffuser 62, the second optical system 63, the first lens array 64, and the second lens array 65 are arranged in the optical path between the light combiner 20 and the polarization converter 66. Note in FIG. 1 that the image forming unit 130 is shown at a position shifted from the light separator 40 toward the -X side for convenience of illustration.

The light separator 40 and a mirror 52, which is a portion of the light guide system 50, are disposed on the second optical axis AX2. The light guide system 50 and the light combiner 20 are arranged on the third optical axis AX3.

The light source 10 includes a first light emitter 11R, a second light emitter 11G, a third light emitter 11B, a first parallelizing element 12R, a second parallelizing element 12G, and a third parallelizing element 12B.

The first light emitter 11R is, for example, a laser diode (LD) that emits red light (first color light) LR in a red wavelength band (first wavelength band) ranging from 650 nm to 780 nm. The red light LR is linearly polarized light.

The first parallelizing element 12R parallelizes the red light LR, which is radially divergent light emitted from the first light emitter 11R.

The second light emitter 11G is, for example, a laser diode (LD) that emits green light (second color light) LG in a green wavelength band (second wavelength band) ranging from 520 nm to 600 nm. The green light LG is linearly polarized light.

The second parallelizing element 12G parallelizes the green light LG, which is radially divergent light emitted from the second light emitter 11G.

The third light emitter 11B is, for example, a laser diode (LD) that emits blue light (third color light) LB in a blue wavelength band (third wavelength band) ranging from 420 nm to 500 nm. The blue light LB is linearly polarized light.

The third parallelizing element 12B parallelizes the blue light LB, which is radially divergent light emitted from the third light emitter 11B.

Since the projector 1 according to the present embodiment employs a configuration that does not use diffracted light, multimode-oscillation laser light emitters can be used as the light emitters 11R, 11G, and 11B of the light source 10. The configuration described above can suppress generation of speckle noise while providing an intense output as compared with a configuration using single-mode-oscillation laser light emitters.

Based on the configuration described above, the light source 10 outputs white illumination light LW containing the red light LR, the green light LG, and the blue light LB, which are each parallelized light. Note that the number of the light emitters 11R, 11G, and 11B in the light source 10 is set as appropriate in accordance with color balance required for the illumination light LW.

The multiple types of color light LR, LG, and LB contained in the illumination light LW output from the light source 10 each correspond to P-polarized light with respect to the light combiner 20. That is, the multiple types of color light LR, LG, and LB each correspond to an example of light polarized in a first polarization direction with respect to the light combiner 20.

The illumination light LW output from the light source 10 is incident on the light combiner 20. The light combiner 20 is a polarization separator characterized by transmitting P-polarized light out of incident light and reflecting S-polarized light out of the incident light.

In the present embodiment, since the illumination light LW output from the light source 10 is P-polarized light with respect to the light combiner 20, the illumination light LW passes through the light combiner 20.

The illumination light LW having passed through the light combiner 20 is reflected by the deflector 25, and the traveling direction of the illumination light LW changes by 90 degrees. The deflector 25 is configured, for example, with a mirror. The illumination light LW reflected by the deflector 25 enters the first optical system 60. The first optical system 60 collects the light incident from the light combiner 20.

The first optical system 60 includes, for example, a first lens 60a and a second lens 60b.

In the present embodiment, the first lens 60a and the second lens 60b are each configured with a convex lens. The first optical system 60 collects the illumination light LW and causes the collected illumination light LW to enter the diffuser 62.

The diffuser 62 transmits the illumination light LW incident from the -Y side in the Y-axis direction, diffuses the illumination light LW at a diffusion surface of the diffuser 62, and outputs the diffused illumination light LW toward the +Y side. The diffuser 62 is, for example, a known diffuser plate or diffuser corresponding to color light in the visible wavelength band.

Since the illumination light LW output from the light source 10 is coherent light, there is a concern that speckles are generated in a projected image. In contrast, in the present embodiment, the diffuser 62 diffuses the illumination light LW to reduce the speckle noise generated by the illumination light LW.

The second optical system 63 includes, for example, a first collimation lens 63a and a second collimation lens 63b. The second optical system 63 is a parallelizing optical system that substantially parallelizes the illumination light LW diffused by the diffuser 62. The first collimation lens 63a and the second collimation lens 63b are each configured with a convex lens. The light parallelized by the second optical system 63 enters the first lens array 64.

The first lens array 64 includes multiple first lenslets 64a, which divide the illumination light LW from the second optical system 63 into multiple sub-luminous fluxes. The multiple first lenslets 64a are arranged in a matrix in a plane perpendicular to the illumination optical axis AX.

The second lens array 65 includes multiple second lenslets 65b corresponding to the multiple first lenslets 64a of the first lens array 64. The multiple second lenslets 65b are arranged in a matrix in a plane perpendicular to the illumination optical axis AX.

The superimposing lens 67 is a lens that superimposes beams output from the second lens array 65 on one another at the light modulator 30. Based on the configuration described above, the second lens array 65 along with the superimposing lens 67 superimposes images of the first lenslets 64a of the first lens array 64 on one another in the vicinity of an image formation region of the light modulator 30.

The polarization converter 66 is an element that aligns the polarization directions of the light incident from the light combiner 20. Specifically, the polarization converter 66 converts the polarization directions of the light output from the second lens array 65 into a polarization direction of polarized light passing through a light-incident-side polarizer 32 of the light modulator 30, which will be described later. The polarization direction of the light passing through the light-incident-side polarizer 32 corresponds to S-polarized light with respect to a liquid crystal panel 31.

In the present embodiment, a field lens 68 is disposed in the optical path of the illumination light LW between the superimposing lens 67 and the light-incident-side polarizer 32. The field lens 68 parallelizes the illumination light LW to be incident on the light modulator 30. The illumination light LW can therefore efficiently enter the light-incident-side polarizer 32 of the light modulator 30.

Aligning the polarization directions of the illumination light LW with the transmission axis direction of the light-incident-side polarizer 32 by using the polarization converter 66 as described above can reduce loss of the illumination light LW due to the light-incident-side polarizer 32 to increase the efficiency at which the illumination light LW is used.

The light modulator 30 in the present embodiment is disposed at a position where an intermediate image is formed by the illumination light LW output from the light source 10. According to the configuration described above, the illumination light LW can be efficiently incident on a light incident region of the light modulator 30.

The light modulator 30 in the present embodiment includes the liquid crystal panel 31, which is a transmissive liquid crystal panel, and the light-incident-side polarizer 32 provided at the light incident side of the liquid crystal panel 31. The liquid crystal panel 31 modulates the illumination light LW based on image information input from an image input apparatus that is not shown such as a personal computer or a portable terminal device.

Based on the configuration described above, the liquid crystal panel 31 in the present embodiment outputs white image modulated light IL. The image modulated light IL output from the liquid crystal panel 31 includes image generating light IL1, which is used for image generation, and image non-generating light IL2, which is not used for image generation. That is, the image generating light IL1 corresponds to light forming bright gradation pixels of an image, and the image non-generating light IL2 contained in the image modulated light IL corresponds to light forming dark gradation pixels of the image.

In a typical liquid crystal panel of related art, the image non-generating light, which forms the dark gradation pixels, is blocked by a light-exiting-side polarizer, and only the image generating light, which forms the bright gradation pixels, is allowed to pass through the light-exiting-side polarizer and projected onto a screen SCR as a desired image. Therefore, in the typical liquid crystal panel of related art, since the image non-generating light IL2 blocked by the light-exiting-side polarizer cannot be used as the illumination light LW, there is a problem of a decrease in the efficiency at which the illumination light LW output from the light source 10 is used.

In contrast, in the projector 1 according to the present embodiment, the efficiency at which the illumination light LW output from the light source 10 is used is increased by recycling the image non-generating light IL2, which is not used for image generation in the light modulator 30, and causing the recycled image non-generating light IL2 to return to the light modulator 30, as will be described later.

The configuration in which the image non-generating light IL2 is recycled will be specifically described below.

The image modulated light IL output from the liquid crystal panel 31 is incident on the light separator 40. The light separator 40 separates the image modulated light IL incident from the liquid crystal panel 31 into the image generating light IL1 and the image non-generating light IL2. The light separator 40 in the present embodiment is configured with a polarizing beam splitter that transmits P-polarized light and reflects S-polarized light.

A light incident surface 40a of the light separator 40 is not parallel to but intersects with the optical axis of the image modulated light IL output from the light modulator 30. Specifically, the light separator 40 is disposed at an angle of 45 degrees with respect to the illumination optical axis AX.

The image generating light IL1 corresponds to P-polarized light with respect to the light separator 40, and the image non-generating light IL2 corresponds to S-polarized light with respect to the light separator 40. The liquid crystal panel 31 in the present embodiment generates the image modulated light IL by adjusting the degree of modulation of the illumination light LW, that is, the ratio between the P-polarized light and the S-polarized light in accordance with the brightness of the image generating light IL1, which passes through the light separator 40 and is therefore used as image light.

Based on the configuration described above, the light separator 40 transmits the P-polarized light out of the image modulated light IL as the image generating light IL1, and reflects the S-polarized light out of the image modulated light IL as the image non-generating light IL2 in the direction along the second optical axis AX2, so that the image generating light IL1 and the image non-generating light IL2 can travel in different directions. The image generating light IL1 and the image non-generating light IL2 can therefore be favorably separated from the image modulated light IL.

The image generating light IL1 passing through the light separator 40 and therefore separated from the image modulated light IL enters the image forming unit 130. Details of the configuration of the image forming unit 130 will be described later.

The image forming unit 130 modulates the image generating light IL1 incident from the light separator 40 to generate color image light. The projection optical apparatus 70 enlarges and projects the color image light incident from the image forming unit 130 toward the screen SCR, which is a projection receiving surface. Note that an absorptive polarizer that transmits polarized light corresponding to the image light and absorbs the other polarized light may be provided at a light incident surface of the projection optical apparatus 70.

The projection optical apparatus 70 is configured, for example, with one or more optical lenses. Examples of the optical lenses may include a variety of lenses, such as a planoconvex lens, a biconvex lens, a meniscus lens, an aspherical lens, a rod lens, and a freeform surface lens.

The image non-generating light IL2 reflected by the light separator 40 and therefore separated from the image modulated light IL enters the light guide system 50. The light guide system 50 guides the image non-generating light IL2 incident from the light separator 40 to the light combiner 20. The configuration of the light guide system 50 will be described later.

In the present embodiment, the image non-generating light IL2 caused to be incident on the light combiner 20 by the light guide system 50 is S-polarized light with respect to the light combiner 20. That is, the image non-generating light IL2 corresponds to an example of light polarized in a second polarization direction perpendicular to the first polarization direction with respect to the light combiner 20.

Since the image non-generating light IL2 is S-polarized light with respect to the light combiner 20, the image non-generating light IL2 is reflected by the light combiner 20. The light combiner 20 is disposed at the angle of 45 degrees with respect to the third optical axis AX3 along the optical axis of the image non-generating light IL2. Therefore, the image non-generating light IL2 is reflected by the light combiner 20 toward the +X side and combined with the illumination light LW incident from the light source 10. The light that is the combination of the image non-generating light IL2 and the illumination light LW is hereinafter referred to as combined illumination light LW1 in some cases.

The light guide system 50 in the present embodiment includes a relay optical system 51 including multiple relay lenses 51a and the mirror 52.

The mirror 52 reflects the image non-generating light IL2 incident from the light separator 40 toward the relay optical system 51. The relay optical system 51 brings the light output from the image formation region of the light modulator 30, the region where the image modulated light IL is generated, into focus at a light incident surface of the first optical system 60. Note that the light incident surface of the first optical system 60 corresponds to a light incident surface 60b1 of the second lens 60b.

That is, in the present embodiment, the multiple relay lenses 51a of the relay optical system 51 are so configured that a light exiting surface of the image formation region of the light modulator 30 is optically conjugate with the light incident surface 60b1 of the second lens 60b. FIG. 1 shows that the relay optical system 51 includes four relay lenses 51a by way of example, but the number and arrangement of the relay lenses 51a can be changed as appropriate in accordance with the optical characteristics required for the relay optical system 51.

Using the light guide system 50 configured with the relay optical system 51 as described above allows the image non-generating light IL2 output from the image formation region of the light modulator 30 and traveling via the light separator 40 and the light combiner 20 to efficiently enter the first optical system 60.

Note that the relay optical system 51 may be replaced with a rod lens 500 indicated by the two-dot chain line in FIG. 1. The rod lens 500 may have a solid structure using total reflection or a hollow structure having a space defined by a mirror. When the thus configured rod lens 500 is used, image non-generating light propagating while repeatedly reflected in the rod lens 500 and therefore having a uniform in-plane intensity distribution can be output via the light exiting surface of the rod lens 500.

In the combined illumination light LW1, a luminous flux width W1 of the image non-generating light IL2 incident from the light modulator 30 is greater than a luminous flux width W2 of the illumination light LW output from the light source 10. The combined illumination light LW1 therefore has illuminance unevenness in which the luminance of a central portion is relatively higher than the luminance of a peripheral portion.

The combined illumination light LW1 collected by the first optical system 60 enters the diffuser 62, and the image non-generating light IL2 and the illumination light LW having the same divergent state are output from the diffuser 62. The combined illumination light LW1 diffused by the diffuser 62 therefore has a substantially fixed luminous flux width, and has a uniform illuminance distribution.

The combined illumination light LW1 enters the light modulator 30 via the first lens array 64, the second lens array 65, the polarization converter 66, the superimposing lens 67, and the field lens 68, as the illumination light LW described above. The image non-generating light IL2 and the illumination light LW contained in the combined illumination light LW1 have polarization directions different from each other, but the combined illumination light LW1 passes through the polarization converter 66, which aligns the polarization directions of the image non-generating light IL2 and the illumination light LW with the transmission axis direction of the light-incident-side polarizer 32. Therefore, the combined illumination light LW1 passes through the light-incident-side polarizer 32 and is favorably incident on the liquid crystal panel 31.

In addition, the combined illumination light LW1 having a uniform illuminance distribution as described above allows the liquid crystal panel 31 of the light modulator 30 to generate high-quality image modulated light IL without illuminance unevenness.

Part of the combined illumination light LW1 is separated as the image non-generating light IL2 by the light separator 40, combined at the light combiner 20 with the illumination light LW output from the light source 10, and enters the light modulator 30 as the combined illumination light. The cycle of the operations described above is repeated. The luminance of the image generating light IL1 corresponding to the bright gradation component contained in the image modulated light IL can thus be increased. The contrast of the image generated by modulating the image generating light IL1 in the image forming unit 130 can therefore be further increased, as will be described later.

The configuration of the image forming unit 130 will subsequently be described.

The image forming unit 130 includes a color separation system 15, a first image light modulator 30R, a second image light modulator 30G, a third image light modulator 30B, and a light combining system 6.

The color separation system 15 separates the white image generating light IL1 incident from the light separator 40 into red image generating light (first image generating light) IL1r, green image generating light (second image generating light) IL1g, and blue image generating light (third image generating light) IL1b. The color separation system 15 includes a first dichroic mirror 7a, a second dichroic mirror 7b, a first reflection mirror 8a, a second reflection mirror 8b, a third reflection mirror 8c, a fourth reflection mirror 8d, a first relay lens 9a, a second relay lens 9b, a third relay lens 9c, and a fourth relay lens 9d.

The first dichroic mirror 7a separates the white image generating light IL1 into the blue image generating light IL1b and the other light that is the combination of the red image generating light IL1r and the green image generating light IL1g. The first dichroic mirror 7a transmits the blue image generating light IL1b and reflects the red image generating light IL1r and the green image generating light IL1g, which form the other light. The second dichroic mirror (color separator) 7b reflects the green image generating light IL1g and transmits the red image generating light IL1r to separate the red image generating light IL1r and the green image generating light IL1g, which form the other light, into the red image generating light IL1r and the green image generating light IL1g.

The first reflection mirror 8a is disposed in the optical path of the red image generating light IL1r and reflects the red image generating light IL1r having passed through the second dichroic mirror 7b toward the first image light modulator 30R. The second reflection mirror 8b is disposed in the optical path of the green image generating light IL1g and reflects the green image generating light IL1g reflected by the second dichroic mirror 7b toward the second image light modulator 30G. The third reflection mirror 8c and the fourth reflection mirror 8d are disposed in the optical path of the blue image generating light IL1b, and guide the blue image generating light IL1b having passed through the first dichroic mirror 7a to the third image light modulator 30B.

The first relay lens 9a is disposed on the light incident side of the color separation system 15 in the optical path of the illumination light LW. The second relay lens 9b is disposed on the light incident side of the second dichroic mirror 7b in the optical path of the red image generating light IL1r and the green image generating light IL1g. The third relay lens 9c is disposed on the light exiting side of the first dichroic mirror 7a in the optical path of the blue image generating light IL1b. The fourth relay lens 9d is disposed between the third reflection mirror 8c and the fourth reflection mirror 8d in the optical path of the blue image generating light IL1b, and has the function of compensating for the optical loss of the blue image generating light IL1b resulting from the fact that the optical path length of the blue image generating light IL1b is longer than the optical path lengths of the red image generating light IL1r and the green image generating light IL1g.

The first relay lens 9a and the second relay lens 9b are so configured that a light incident surface of the image formation region, where the image modulated light IL is generated in the light modulator 30, is optically conjugate with light incident surfaces of the first image light modulator 30R and the second image light modulator 30G. According to the configuration described above, the color separation system 15 can efficiently cause the red image generating light IL1r and the green image generating light IL1g separated from the image generating light IL1 to be incident on the light incident surfaces of the first image light modulator 30R and the second image light modulator 30G.

Furthermore, the first relay lens 9a and the third relay lens 9c are so configured that the light incident surface of the image formation region, where the image modulated light IL is generated in the light modulator 30, is optically conjugate with a light incident surface of the third image light modulator 30B. According to the configuration described above, the color separation system 15 efficiently allows the blue image generating light IL1b separated from the image generating light IL1 to be incident on the light incident surface of the third image light modulator 30B.

The first image light modulator 30R modulates the red image generating light IL1r out of the image generating light IL1 to generate image light corresponding to the red image generating light IL1r. The second image light modulator 30G modulates the green image generating light IL1g out of the image generating light IL1 to generate image light corresponding to the green image generating light IL1g. The third image light modulator 30B modulates the blue image generating light IL1b out of the image generating light IL1 to generate image light corresponding to the blue image generating light IL1b.

The first image light modulator 30R includes a red liquid crystal panel 31R, a light-incident-side polarizer 32R, and a light-exiting-side polarizer 33R.

The second image light modulator 30G includes a green liquid crystal panel 31G, a light-incident-side polarizer 32G, and a light-exiting-side polarizer 33G.

The third image light modulator 30B includes a blue liquid crystal panel 31B, a light-incident-side polarizer 32B, and a light-exiting-side polarizer 33B.

A field lens 68R, a field lens 68G, and a field lens 68B are disposed on the light incident side of the first image light modulator 30R, the second image light modulator 30G, and the third image light modulator 30B, respectively. The field lens 68R, the field lens 68G, and the field lens 68B parallelize the red image generating light IL1r, the green image generating light IL1g, and the blue image generating light IL1b incident on the first image light modulator 30R, the second image light modulator 30G, and the third image light modulator 30B, respectively.

The polarization direction of the image generating light IL1, which is the P-polarized light having passed through the light separator 40, coincides with the direction along the light transmission axis of each of the light-incident-side polarizers 32R, 32G, and 32B. Therefore, the red image generating light IL1r, the green image generating light IL1g, and the blue image generating light IL1b pass through the light-incident-side polarizers 32R, 32G, and 32B, respectively, and are efficiently incident on the liquid crystal panels 31R, 31G, and 31B, respectively. The light-exiting-side polarizers 33R, 33G, and 33B are disposed on the light exiting side of the liquid crystal panels 31R, 31G, and 31B, and the light transmission axes of the light-exiting-side polarizers 33R, 33G, and 33B are perpendicular to the light transmission axes of the light-incident-side polarizers 32R, 32G, and 32B, respectively.

The red liquid crystal panel 31R modulates the red image generating light IL1r incident via the field lens 68R based on image information to generate red image light (first image light) GR. The green liquid crystal panel 31G modulates the green image generating light IL1g incident via the field lens 68G based on image information to generate green image light (second image light) GG. The blue liquid crystal panel 31B modulates the blue image generating light IL1b incident via the field lens 68B based on image information to generate blue image light (third image light) GB.

The red image light as a result of the modulation performed by the first image light modulator 30R enters the light combining system 6 via the light-exiting-side polarizer 33R. Similarly, the green image light as a result of the modulation performed by the second image light modulator 30G and the blue image light as a result of the modulation performed by the third image light modulator 30B enter the light combining system 6. The light combining system 6 outputs color image light that is the combination of the red image light, the green image light, and the blue image light toward the projection optical apparatus 70. The light combining system 6 is, for example, a cross dichroic prism.

In the present embodiment, a retardation film 6a is provided at a light incident surface of the light combining system 6 that is the surface onto which the green image light GG is incident. The retardation film 6a is a half-wave plate that imparts a phase difference of half the wavelength to the green image light GG. Therefore, the green image light GG passing through the retardation film 6a is converted into P-polarized light with respect to the cross dichroic prism, and the red image light GR and the blue image light GB remain S-polarized light with respect to the cross dichroic prism. The image light GR, the image light GG, and the image light GB having the respective colors are therefore favorably combined by the light combining system 6, and the combined light is enlarged and projected onto the screen SCR by the projection optical apparatus 70.

As described above, the projector 1 according to the present embodiment includes the light source 10, which outputs the white illumination light LW containing the red light LR, the green light LG, and the blue light LB, the light combiner 20, onto which the illumination light LW output from the light source 10 is incident, the light modulator 30, which modulates the light incident from the light combiner 20 to generate the image modulated light IL, the light separator 40, which separates the image modulated light IL incident from the light modulator 30 into the image generating light IL1 used for image generation and the image non-generating light IL2 not used for image generation, the image forming unit 130, which modulates the image generating light IL1 incident from the light separator 40 to generate color image light, the projection optical apparatus 70, which projects the image light incident from the image forming unit 130, the light guide system 50, which guides the image non-generating light IL2 incident from the light separator 40 to the light combiner 20, and the polarization converter 66, which is disposed in the optical path between the light combiner 20 and the light modulator 30 and aligns the polarization directions of the light incident from the light combiner 20. The illumination light LW output from the light source 10 is P-polarized light with respect to the light combiner 20, and the image non-generating light IL2 caused to be incident on the light combiner 20 by the light guide system 50 is S-polarized light with respect to the light combiner 20. The image non-generating light IL2 is combined with the illumination light LW incident from the light source 10, and the combined light is incident on the light modulator 30.

In the projector 1 according to the present embodiment, the image non-generating light IL2 corresponding to the dark gradation component that is not used to generate the image light in the image forming unit 130 can be separated by the light separator 40, which is upstream from the image forming unit 130, and recycled as the illumination light LW. The efficiency at which the illumination light LW output from the light source 10 is used can therefore be increased. Furthermore, the present embodiment, in which the light modulator 30 collectively modulates the multiple types of color light LR, LG, and LB contained in the illumination light LW, allows simplification and size reduction of the configuration of the projector 1 as compared with a case where light modulators are separately provided for the multiple types of color light LR, LG, and LB. The projector 1 according to the present embodiment can therefore be a compact projector that efficiently uses light and projects a high-contrast, high-quality image.

The projector 1 according to the present embodiment, which employs the light separator 40, which separates the image non-generating light IL2 from the image modulated light IL by using the difference in the polarization direction instead of using diffraction of light, can reduce the size and cost of the configuration of the projector 1 as compared with the related art, in which a spatial light modulator is used.

In addition, diffraction loss due to zero-order light, a high-order diffraction image, and the like does not occur because diffraction of light is not used, so that the light use efficiency can be sufficiently increased.

### First modification

Another configuration relating to the first embodiment will be subsequently described as a first modification. The present modification differs from the first embodiment in the configuration of the light separator. The configurations of the light separator and therearound will therefore be primarily described below, and elements common to those in the drawings used in the embodiment described above have the same reference characters and will not be described.

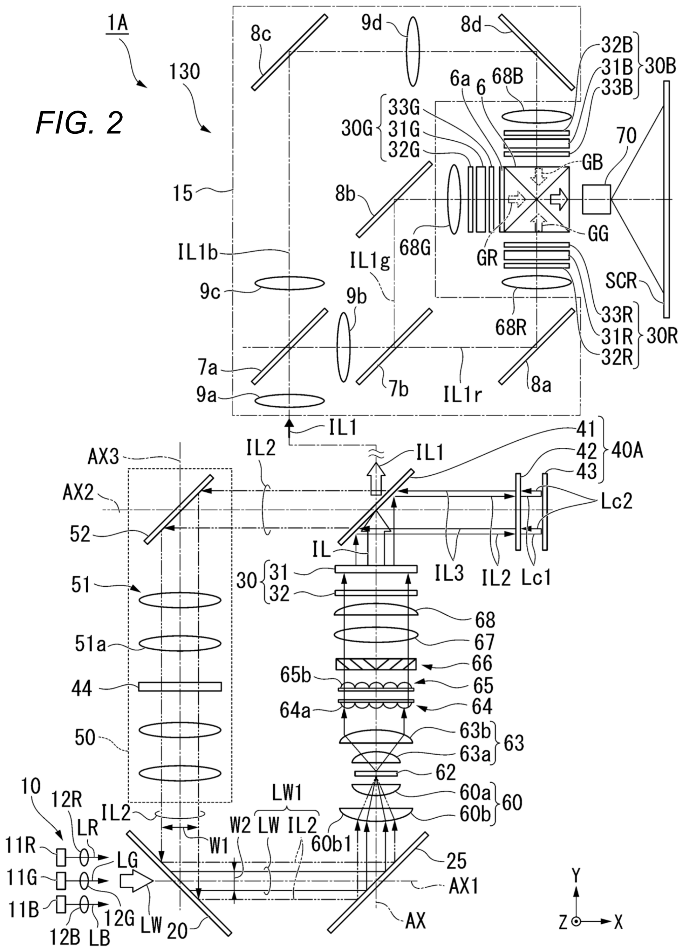

FIG. 2 shows the configuration of key parts of a projector 1A according to the present modification.

A light separator 40A of the projector 1A according to the present modification includes a polarization separator 41, a retarder 42, and a reflector 43, as shown in FIG. 2.

The polarization separator 41 is configured with a polarizing beam splitter that transmits the image generating light IL1, which is P-polarized light, and reflects the image non-generating light IL2, which is S-polarized light. The image generating light IL1 having passed through the polarization separator 41 enters the image forming unit 130, is modulated into the image light by the image forming unit 130, and is enlarged and projected onto the screen SCR by the projection optical apparatus 70.

The polarization separator 41 reflects the image non-generating light IL2 out of the image modulated light IL incident from the light modulator 30 toward the +X side to cause the image non-generating light IL2 to enter the retarder 42. The retarder 42 is configured with a quarter-wave plate disposed in the optical path between the polarization separator 41 and the reflector 43. The S-polarized image non-generating light IL2 reflected by the polarization separator 41 therefore enters the retarder 42. The S-polarized image non-generating light IL2 is converted, for example, into right-handed circularly polarized, image non-generating light Lc1 by the retarder 42, and is then incident on the reflector 43. The reflector 43 reflects the image non-generating light Lc1 having passed through the retarder 42 toward the retarder 42. The right-handed circularly polarized, image non-generating light Lc1 is reflected by the reflector 43 as left-handed circularly polarized, image non-generating light Lc2.

The left-handed circularly polarized, image non-generating light Lc2 is converted into P-polarized, image non-generating light IL3 by the retarder 42. The P-polarized, image non-generating light IL3 passes through the polarization separator 41, travels along the second optical axis AX2, and enters the light guide system 50. The image non-generating light IL3 reflected by the reflector 43 and passing through the retarder 42 thus passes through the polarization separator 41, so that the image non-generating light IL3 is separated from the image generating light IL1.

In the present modification, since the image non-generating light IL3 enters the light guide system 50 as P-polarized light, the image non-generating light IL3 is converted into S-polarized light with respect to the light combiner 20 by a half-wave plate 44 disposed in the optical path of the light guide system 50. The light combiner 20 can thus combine the image non-generating light IL3 with the illumination light LW output from the light source 10.

In the projector 1A according to the present modification, which uses the light separator 40A configured differently from the light separator 40 in the first embodiment, the image non-generating light IL3 corresponding to the dark gradation component not used for image generation is recycled as the illumination light LW as in the case of the first embodiment, so that the efficiency at which the illumination light LW output from the light source 10 is used can be increased. The projector 1A according to the present modification can therefore be a compact projector that efficiently uses light and projects a high-contrast, high-quality image.

### Second embodiment

A projector according to a second embodiment of the present disclosure will be subsequently described. The basic configuration of the projector according to the second embodiment is the same as that in the first embodiment, but the configuration of the image forming unit differs from that in the first embodiment. The configuration of the image forming unit will therefore be primarily described below, and elements common to those in the drawings used in the embodiment described above have the same reference characters and will not be described.

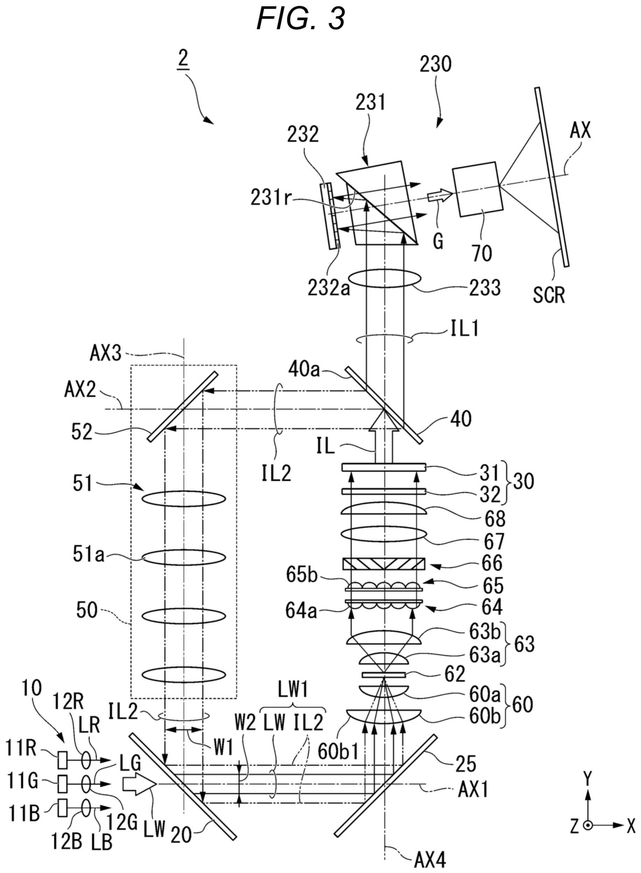

FIG. 3 is a schematic view showing the configuration of a projector 2 according to the second embodiment.

The projector 2 according to the present embodiment includes the light source 10, the light combiner 20, the deflector 25, the light modulator 30, the light separator 40, an image forming unit 230, the light guide system 50, the first optical system 60, the diffuser 62, the second optical system 63, the first lens array 64, the second lens array 65, the polarization converter 66, the superimposing lens 67, and the projection optical apparatus 70, as shown in FIG. 3.

The projector 2 according to the present embodiment has the illumination optical axis AX, the first optical axis AX1, the second optical axis AX2, the third optical axis AX3, and a fourth optical axis AX4. The light source 10, the light combiner 20, and the deflector 25 are arranged on the first optical axis AX1. The deflector 25, the first optical system 60, the diffuser 62, the second optical system 63, the first lens array 64, the second lens array 65, the polarization converter 66, the superimposing lens 67, the light separator 40, and the image forming unit 230 are arranged on the fourth optical axis AX4. The image forming unit 230 and the projection optical apparatus 70 are disposed on the illumination optical axis AX. The illumination optical axis AX is an axis that obliquely intersects with the fourth optical axis AX4.

The light source 10 in the present embodiment outputs the red light LR, the green light LG, and the blue light LB, which are each parallelized light, as the illumination light LW in a temporally sequential manner. Therefore, the light modulator 30 in the present embodiment modulates the multiple types of color light LR, LG, and LB incident as the illumination light LW in a temporally sequential manner, and outputs blue, green, or red image modulated light IL in a time division manner.

The image forming unit 230 in the present embodiment includes a total reflection prism 231, a light modulating element 232, and a relay lens 233.

The total reflection prism 231 is configured with a prism group configured with two prisms disposed to face each other with a fixed-thickness air layer interposed therebetween, and has a reflection surface 231r. The angle of the reflection surface 231r is so set that the image generating light IL1 incident from the light separator 40 via the relay lens 233 is totally reflected toward the light modulating element 232.

The light modulating element 232 in the present embodiment is configured with a micromirror-type light modulating element. The light modulating element 232 in the present embodiment is configured, for example, with a digital micromirror device (DMD), and includes multiple micromirrors 232a arranged in a matrix. The DMD generates image light in accordance with the orientations of the multiple micromirrors 232a. Specifically, the DMD generates the image light by changing the inclination direction of each of the multiple micromirrors 232a. In the present embodiment, the DMD generates image light in a time division manner, the image light having a color tone corresponding to the image generating light IL1 incident from the light separator 40 in a time division manner. The DMD reflects the image light in a direction along the illumination optical axis AX passing through the reflection surface 231r of the total reflection prism 231.

The relay lens 233 is so configured that the light incident surface of the image formation region, where the image modulated light IL is generated in the light modulator 30, is optically conjugate with the surface of each of the mirrors of the light modulating element 232, which is the light incident surface of the image forming unit 230. According to the configuration described above, the image forming unit 230 allows the image generating light IL1 to be efficiently incident on the surface of each of the mirrors of the light modulating element 232.

Image light G output from the total reflection prism 231 along the illumination optical axis AX enters the projection optical apparatus 70 and is enlarged and projected toward the screen SCR.

As described above, in the projector 2 according to the present embodiment, which uses the light modulating element 232 configured with the DMD as the image forming unit 230, the image non-generating light IL2 corresponding to the dark gradation component not used for image generation can be recycled as the illumination light LW. The efficiency at which the illumination light LW output from the light source 10 is used can therefore be increased. The projector 2 according to the present embodiment can therefore be a compact projector that efficiently uses light and projects a high-contrast, high-quality image.

Furthermore, also in the projector 2 according to the present embodiment, which employs the configuration in which the image non-generating light IL2 is separated from the image modulated light IL by using the difference in the light exiting direction from the light separator 40 instead of using diffraction of light, the size and cost of the configuration of the projector 2 can be reduced as compared with the related art, in which a spatial light modulator is used. In addition, diffraction loss due to zero-order light, a high-order diffraction image, and the like does not occur because diffraction of light is not used, so that the light use efficiency can be sufficiently increased.

### Second modification

Another configuration relating to the second embodiment will be subsequently described as a second modification. The present modification differs from the second embodiment in the configuration of the light separator. The configurations of the light separator and therearound will therefore be primarily described below, and elements common to those in the drawings used in the embodiments described above have the same reference characters and will not be described.

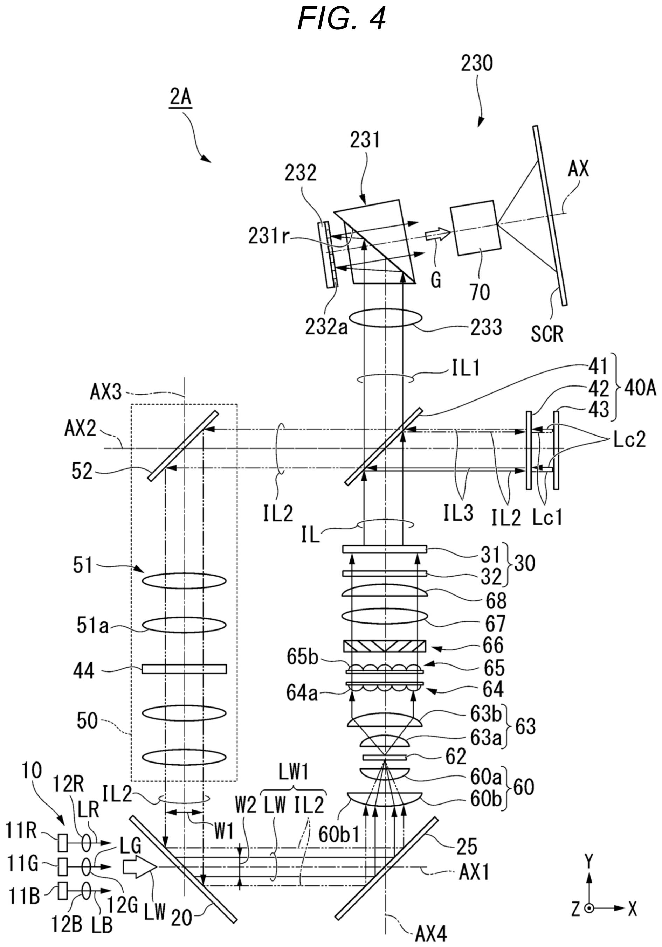

FIG. 4 shows the configuration of key parts of a projector 2A according to the present modification.

The light separator of the projector 2A according to the present modified example has the light separator 40A shown in FIG. 2, as shown in FIG. 4.

In the projector 2A according to the present modification, which uses the light separator 40A having a configuration different from that in the second embodiment, the image non-generating light IL3 corresponding to the dark gradation component not used for image generation is recycled as the illumination light LW as in the second embodiment, so that the efficiency at which the illumination light LW output from the light source 10 is used can be increased. The projector 2A according to the present modification can therefore be a compact projector that efficiently uses light and projects a high-contrast, high-quality image.

### Third embodiment

A projector according to a third embodiment of the present disclosure will be subsequently described. The basic configuration of the projector according to the third embodiment is the same as that in the first embodiment, but the configuration of the image forming unit differs from those in the other embodiments described above. The configuration of the image forming unit will therefore be primarily described below, and elements common to those in the drawings used in the embodiments described above have the same reference characters and will not be described.

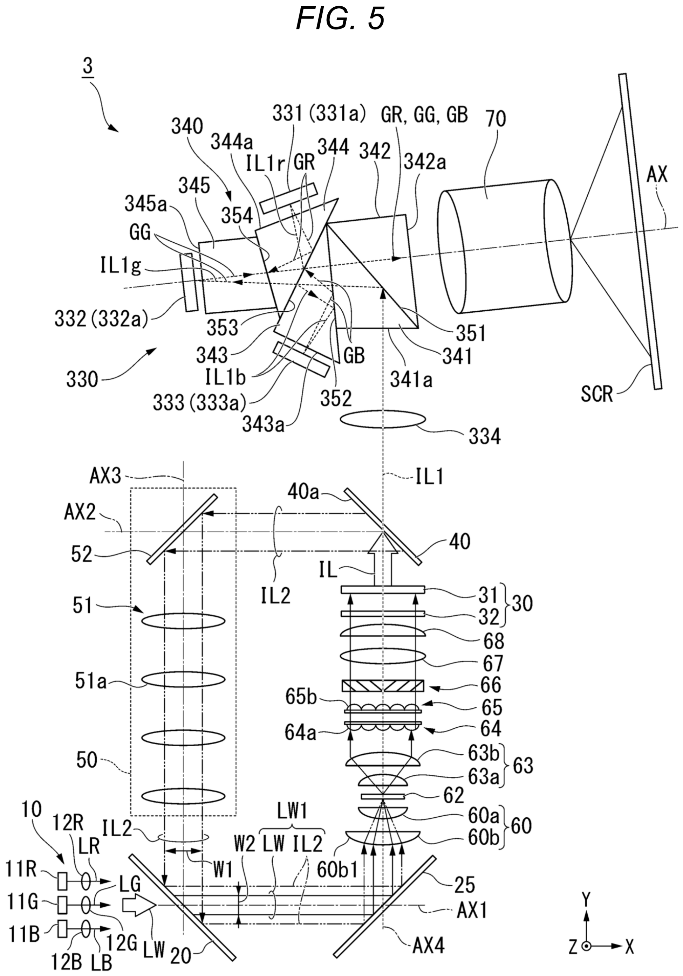

FIG. 5 is a schematic view showing the configuration of a projector 3 according to the third embodiment.

The projector 3 according to the present embodiment includes the light source 10, the light combiner 20, the deflector 25, the light modulator 30, the light separator 40, an image forming unit 330, the light guide system 50, the first optical system 60, the diffuser 62, the second optical system 63, the first lens array 64, the second lens array 65, the polarization converter 66, the superimposing lens 67, and the projection optical apparatus 70, as shown in FIG. 5.

The projector 3 according to the present embodiment has the illumination optical axis AX, the first optical axis AX1, the second optical axis AX2, the third optical axis AX3, and the fourth optical axis AX4. The light source 10, the light combiner 20, and the deflector 25 are arranged on the first optical axis AX1. The deflector 25, the first optical system 60, the diffuser 62, the second optical system 63, the first lens array 64, the second lens array 65, the polarization converter 66, the superimposing lens 67, the light separator 40, and the image forming unit 330 are arranged on the fourth optical axis AX4. The image forming unit 330 and the projection optical apparatus 70 are disposed on the illumination optical axis AX, which obliquely intersects with the fourth optical axis AX4.

The image forming unit 330 in the present embodiment includes a light combining prism 340, a first light modulating element 331, a second light modulating element 332, a third light modulating element 333, and a relay lens 334.

The first light modulating element 331 is a micromirror-shaped light modulating element, and is configured, for example, with a digital micromirror device (DMD). The first light modulating element 331 includes multiple micromirrors 331a arranged in a matrix. The first light modulating element 331 generates image light in accordance with the orientations of the multiple micromirrors 331a. The first light modulating element 331 modulates the red image generating light (first image generating light) IL1r separated in terms of color by the light combining prism 340 as will be described later in accordance with the orientations of the multiple micromirrors 331a to generate the red image light GR.

The second light modulating element 332 is a micromirror-shaped light modulating element, and is configured, for example, with a digital micromirror device (DMD). The second light modulating element 332 includes multiple micromirrors 332a arranged in a matrix. The second light modulating element 332 generates image light in accordance with the orientations of the multiple micromirrors 332a. The second light modulating element 332 modulates the green image generating light (second image generating light) IL1g separated in terms of color by the light combining prism 340 as will be described later in accordance with the orientations of the multiple micromirrors 332a to generate the green image light GG.

The third light modulating element 333 is a micromirror-shaped light modulating element, and is configured, for example, with a digital micromirror device (DMD). The third light modulating element 333 includes multiple micromirrors 333a arranged in a matrix. The third light modulating element 333 generates image light in accordance with the orientations of the multiple micromirrors 333a. The third light modulating element 333 modulates the blue image generating light IL1b separated in terms of color by the light combining prism 340 as will be described later in accordance with the orientations of the multiple micromirrors 333a to generate the blue image light GB.

The relay lens 334 is so configured that the light incident surface of the image formation region, where the image modulated light IL is generated in the light modulator 30, is optically conjugate with the surface of each of the mirrors of each of the light modulating elements 331, 332, and 333, which is the light incident surface of the image forming unit 330. According to the configuration described above, the image forming unit 330 allows the image generating light IL1 to be efficiently incident on the surface of each of the mirrors of the light modulating element 332.

The light combining prism 340 has a color separation function of distributing the image generating light IL1 incident from the light separator 40 to the first light modulating element 331, the second light modulating element 332, and the third light modulating element 333 described above, and a light combining function of combining the multiple types of color image light GR, GG, and GB output from the first light modulating element 331, the second light modulating element 332, and the third light modulating element 333 and outputting the combined image light toward the projection optical apparatus 70.

The light combining prism 340 includes a first prism 341, a second prism 342, a third prism 343, a fourth prism 344, and a fifth prism 345. The light combining prism 340 has a first reflection surface 351, a second reflection surface 352, a third reflection surface 353, and a fourth reflection surface 354.

The first prism 341, the second prism 342, the third prism 343, and the fourth prism 344 are each a triangular prism having a triangular cross-sectional shape. The fifth prism 345 is a quadrangular prism having a quadrangular cross-sectional shape.

The first reflection surface 351 is configured with an air layer having a fixed thickness and provided at the interface between the first prism 341 and the second prism 342.

The second reflection surface 352 is configured with an air layer having a fixed thickness and provided at the interface between the first prism 341 and the third prism 343.

The third reflection surface 353 is configured with a dichroic mirror provided at the interface between the third prism 343 and the fourth prism 344. The dichroic mirror that constitutes the third reflection surface 353 has optical characteristics of reflecting light in the blue wavelength band and transmitting light in the green wavelength band. The dichroic mirror that constitutes the third reflection surface 353 has dependence of the light in the red wavelength band on the angle of incidence, and has optical characteristics of transmitting the light in the red wavelength band incident at an angle of incidence smaller than a predetermined angle and reflecting the light in the red wavelength band incident at an angle of incidence greater than the predetermined angle.

The fourth reflection surface 354 is configured with a dichroic mirror provided at the interface between the fourth prism 344 and the fifth prism 345. The dichroic mirror that constitutes the fourth reflection surface 354 has optical characteristics of transmitting light in the green wavelength band and reflecting light in the red wavelength band.

The first prism 341 has a light incident surface 341a, onto which the image generating light IL1 is incident.

The image generating light IL1 having entered the first prism 341 via the light incident surface 341a is totally reflected by the first reflection surface 351 and is incident on the second reflection surface 352. In the present embodiment, the image generating light IL1 is incident on the second reflection surface 352 at an angle smaller than the critical angle. Therefore, the image generating light IL1 passes through the second reflection surface 352, enters the third prism 343, and is incident on the third reflection surface 353.

In the present embodiment, since the light source 10 outputs the white illumination light LW, the image generating light IL1 contains a red component, a green component, and a blue component. Therefore, the third reflection surface 353 reflects the blue image generating light IL1b out of the image generating light IL1 and transmits the green image generating light IL1g and the red image generating light IL1r, which are the other color components of the image generating light IL1.

The blue image generating light IL1b reflected by the third reflection surface 353 is totally reflected by the second reflection surface 352 and is incident on the third light modulating element 333. The third light modulating element 333 modulates the blue image generating light IL1b based on image information to generate the blue image light GB. The image light GB enters the third prism 343 via a light incident surface 343a of the third prism 343, is totally reflected by the second reflection surface 352, and is incident on the third reflection surface 353. The third reflection surface 353 reflects the image light GB, which travels along the illumination optical axis AX. Therefore, the image light GB reflected by the third reflection surface 353 passes through the third prism 343, the second reflection surface 352, the first prism 341, the first reflection surface 351, and the second prism 342, and exits out of the light combining prism 340.

The green image generating light IL1g and the red image generating light IL1r having passed through the third reflection surface 353 pass through the fourth prism 344 and is incident on the fourth reflection surface 354. The fourth reflection surface 354 transmits the green image generating light IL1g and reflects the red image generating light IL1r.

The green image generating light IL1g having passed through the fourth reflection surface 354 passes through the fifth prism 345 and is incident on the second light modulating element 332. The second light modulating element 332 modulates the green image generating light IL1g based on image information to generate the green image light GG. The image light GG enters the fifth prism 345 via a light incident surface 345a of the fifth prism 345 and travels along the illumination optical axis AX. Therefore, the image light GG passes through the fifth prism 345, the fourth reflection surface 354, the fourth prism 344, the third reflection surface 353, the third prism 343, the second reflection surface 352, the first prism 341, the first reflection surface 351, and the second prism 342, and exits out of the light combining prism 340.

The red image generating light IL1r reflected by the fourth reflection surface 354 travels through the fourth prism 344 and is incident on the third reflection surface 353. In the present embodiment, the red image generating light IL1r reflected by the fourth reflection surface 354 is incident on the third reflection surface 353 at an angle of incidence greater than a predetermined angle. The third reflection surface 353 therefore reflects the red image generating light IL1r. The red image generating light IL1r reflected by the third reflection surface 353 passes through the fourth prism 344 and is incident on the first light modulating element 331.

The first light modulating element 331 modulates the red image generating light IL1r based on image information to generate the red image light GR. The image light GR travels through the fourth prism 344 via a light incident surface 344a of the fourth prism 344 and is incident on the third reflection surface 353 again. In the present embodiment, the image light GR is incident on the third reflection surface 353 at an angle of incidence greater than a predetermined angle. Therefore, the image light GR is reflected by the third reflection surface 353, travels through the fourth prism 344, and is incident on the fourth reflection surface 354. The image light GR is reflected by the fourth reflection surface 354, travels through the fourth prism 344, and is incident on the third reflection surface 353 at an angle of incidence smaller than the predetermined angle. The image light GR passes through the third reflection surface 353 and travels along the illumination optical axis AX. Accordingly, the image light GR passes through the third prism 343, the second reflection surface 352, the first prism 341, the first reflection surface 351, and the second prism 342, and exits out of the light combining prism 340.

The multiple types of color image light GR, GG, and GB are thus combined, and the combined color light enters the projection optical apparatus 70, and is enlarged and projected onto the screen SCR as a color image.

As described above, the projector 3 according to the present embodiment, which uses the three light modulating elements 331, 332, and 333 configured with DMDs as the image forming unit 330, the image non-generating light IL2 corresponding to the dark gradation component not used for image generation can be recycled as the illumination light LW. The efficiency at which the illumination light LW output from the light source 10 is used can therefore be increased. The projector 3 according to the present embodiment can therefore be a compact projector that efficiently uses light and projects a high-contrast, high-quality image.

Furthermore, also in the projector 3 according to the present embodiment, which employs the configuration in which the image non-generating light IL2 is separated from the image modulated light IL by using the difference in the light exiting direction from the light separator 40 instead of using diffraction of light, the size and cost of the configuration of the projector 3 can be reduced as compared with the related art, in which a spatial light modulator is used. In addition, diffraction loss due to zero-order light, a high-order diffraction image, and the like does not occur because diffraction of light is not used, so that the light use efficiency can be sufficiently increased.

### Third modification

Another configuration relating to the third embodiment will be subsequently described as a third modification. The present modification differs from the third embodiment in the configuration of the light separator. The configurations of the light separator and therearound will therefore be primarily described below, and elements common to those in the drawings used in the embodiments described above have the same reference characters and will not be described.

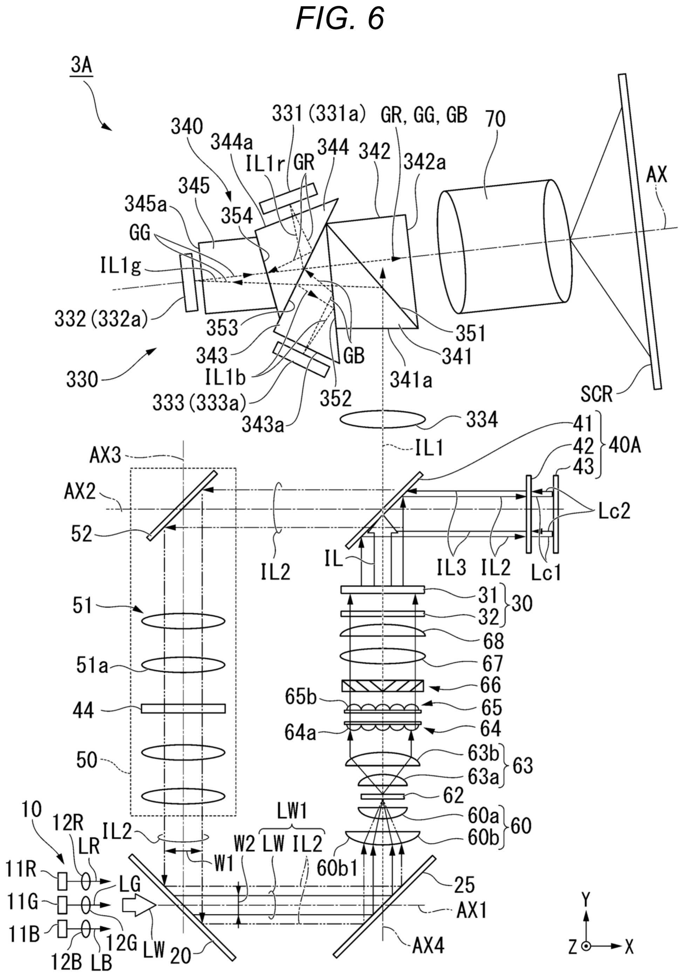

FIG. 6 shows the configuration of key parts of a projector 3A according to the present modification.

The light separator of the projector 3A according to the present modification has the light separator 40A shown in FIG. 2, as shown in FIG. 6.

In the projector 3A according to the present modification, which uses the light separator 40A having a configuration different from that in the third embodiment, the image non-generating light IL3 corresponding to the dark gradation component not used for image generation is recycled as the illumination light LW as in the third embodiment, so that the efficiency at which the illumination light LW output from the light source 10 is used can be increased. The projector 3A according to the present modification can therefore be a compact projector that efficiently uses light and projects a high-contrast, high-quality image.

### Fourth embodiment

A projector according to a fourth embodiment of the present disclosure will be subsequently described. The basic configuration of the projector according to the fourth embodiment is the same as that in the first embodiment, but the configuration of the image forming unit differs from those in the other embodiments described above. The configuration of the image forming unit will therefore be primarily described below, and elements common to those in the drawings used in the embodiments described above have the same reference characters and will not be described.

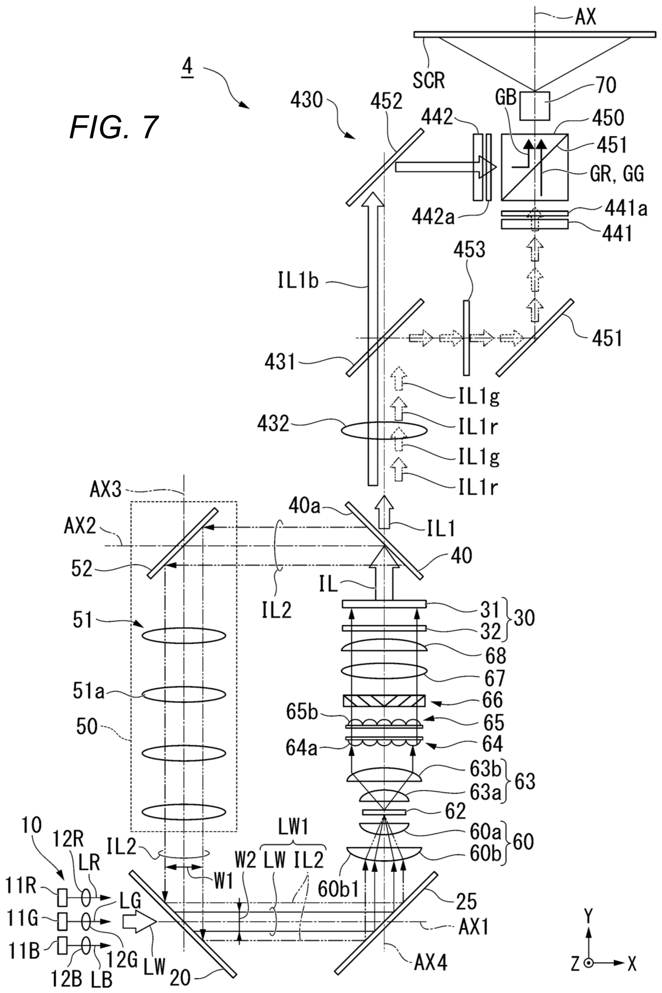

FIG. 7 is a schematic view showing the configuration of a projector 4 according to the fourth embodiment.

The projector 4 according to the present embodiment includes the light source 10, the light combiner 20, the deflector 25, the light modulator 30, the light separator 40, an image forming unit 430, the light guide system 50, the first optical system 60, the diffuser 62, the second optical system 63, the first lens array 64, the second lens array 65, the polarization converter 66, the superimposing lens 67, and the projection optical apparatus 70, as shown in FIG. 7.

The projector 4 according to the present embodiment has the illumination optical axis AX, the first optical axis AX1, the second optical axis AX2, the third optical axis AX3, and the fourth optical axis AX4. The light source 10, the light combiner 20, and the deflector 25 are arranged on the first optical axis AX1. The deflector 25, the first optical system 60, the diffuser 62, the second optical system 63, the first lens array 64, the second lens array 65, the polarization converter 66, the superimposing lens 67, the light separator 40, and the image forming unit 430 are arranged on the fourth optical axis AX4. A portion of the image forming unit 430 and the projection optical apparatus 70 are disposed on the illumination optical axis AX. The illumination optical axis AX is an axis parallel to the fourth optical axis AX4 and separate therefrom toward the -Y side.

The light source 10 in the present embodiment outputs, as the illumination light LW, the red light LR and the green light LG in a temporally sequential manner and continuously outputs the blue light LB. The light modulator 30 in the present embodiment therefore modulates the illumination light LW that is various types of color light incident in a temporally sequential manner, and outputs the image modulated light IL having different colors in a temporally sequential manner. The light separator 40 in the present embodiment therefore outputs the image generating light IL1 according to the color tone of the illumination light LW in a time division manner.

In the present embodiment, the light separator 40 outputs the red image generating light IL1r and the green image generating light IL1g of the green light as the image generating light IL1 in a time division manner, and continuously outputs the blue image generating light IL1b.

The image forming unit 430 in the present embodiment includes a color separator 431, a relay lens 432, a first liquid crystal panel 441, a first light-exiting-side polarizer 441a, a second liquid crystal panel 442, a second light-exiting-side polarizer 442a, an image light combiner 450, a first reflection mirror 451, a second reflection mirror 452, and a retardation film 453.

The relay lens 432 is so configured that the light incident surface of the image formation region, where the image modulated light IL is generated in the light modulator 30, is optically conjugate with the image formation regions of the first liquid crystal panel 441 and the second liquid crystal panel 442, which form a light incident surface of the image forming unit 430. According to the configuration described above, the image forming unit 430 allows the image generating light IL1 to be efficiently incident on the image formation region of each of the liquid crystal panels 441 and 442.

The color separator 431 is configured with a dichroic mirror that separates the optical path of the red image generating light IL1r and the green image generating light IL1g from the optical path of the blue image generating light IL1b out of the image generating light IL1 incident from the light separator 40.

The red image generating light IL1r and the green image generating light IL1g are reflected by the color separator 431 and travel toward the first reflection mirror 451. The first reflection mirror 451 is disposed at a position shifted from the color separator 431 toward the -Y side. The first reflection mirror 451 reflects each of the red image generating light IL1r and the green image generating light IL1g incident from the -X side in a time division manner toward the first liquid crystal panel 441.

The image generating light IL1 incident from the light separator 40 is P-polarized light with respect to the first liquid crystal panel 441. In the present embodiment, in which the red image generating light IL1r and the green image generating light IL1g pass through the retardation film 453 configured with a half-wave plate disposed between the color separator 431 and the first reflection mirror 451, the red image generating light IL1r and the green image generating light IL1g are converted into S-polarized light with respect to the first liquid crystal panel 441.

The first liquid crystal panel 441 generates the red image light (first image light) GR or the green image light (second image light) GG in a time division manner by modulating the red image generating light IL1r or the green image generating light IL1g incident in a time division manner based on corresponding color image information. The image light GR and the image light GG pass through the first light-exiting-side polarizer 441a and enter the image light combiner 450.

The blue image generating light IL1b passes through the color separator 431 and travels toward the second reflection mirror 452. The second reflection mirror 452 reflects the blue image generating light IL1b incident from the -X side toward the second liquid crystal panel 442.

The second liquid crystal panel 442 generates the blue image light (third image light) GB by modulating the blue image generating light IL1b incident in a time division manner based on blue image information. The image light GB passes through the second light-exiting-side polarizer 442a and enters the image light combiner 450.

The image light combiner 450 is disposed in a region where the optical path of the red image generating light IL1r and the green image generating light IL1g output from the first liquid crystal panel 441 in a time division manner intersects with the optical path of the blue image generating light IL1b output from the second liquid crystal panel 442.

The image light combiner 450 is, for example, a cube-shaped beam splitter, and includes a polarization separation film 451. The red image generating light IL1r and the green image generating light IL1g are S-polarized light with respect to the polarization separation film 451, and the blue image generating light IL1b is P-polarized light with respect to the polarization separation film 451.

Therefore, the image light combiner 450 transmits the red image generating light IL1r and the green image generating light IL1g incident as the P-polarized light from the first liquid crystal panel 441 toward the +Y side, and reflects the blue image generating light IL1b incident as the S-polarized light from the second liquid crystal panel 442 toward the +Y side. The image light combiner 450 can therefore output image light that is the combination of the red image generating light IL1r, the green image generating light IL1g, and the blue image generating light IL1b toward the projection optical apparatus 70.

The projection optical apparatus 70 enlarges the image light incident from the image light combiner 450 and projects the enlarged image light onto the screen SCR.

As described above, the projector 4 according to the present embodiment, which uses the image forming unit 430, which projects a full-color image containing RGB color images by using two liquid crystal panels, can recycle the image non-generating light IL2 corresponding to the dark gradation component not used for image generation as the illumination light LW. The efficiency at which the illumination light LW output from the light source 10 is used can therefore be increased. The projector 4 according to the present embodiment can therefore be a compact projector that efficiently uses light and projects a high-contrast, high-quality image.

Furthermore, also in the projector 4 according to the present embodiment, which employs the configuration in which the image non-generating light IL2 is separated from the image modulated light IL by using the difference in the light exiting direction from the light separator 40 instead of using diffraction of light, the size and cost of the configuration of the projector 4 can be reduced as compared with the related art, in which a spatial light modulator is used. In addition, diffraction loss due to zero-order light, a high-order diffraction image, and the like does not occur because diffraction of light is not used, so that the light use efficiency can be sufficiently increased.

### Fourth modification

Another configuration relating to the fourth embodiment will be subsequently described as a fourth modification. The present modification differs from the fourth embodiment in the configuration of the light separator. The configurations of the light separator and therearound will therefore be primarily described below, and elements common to those in the drawings used in the embodiments described above have the same reference characters and will not be described.

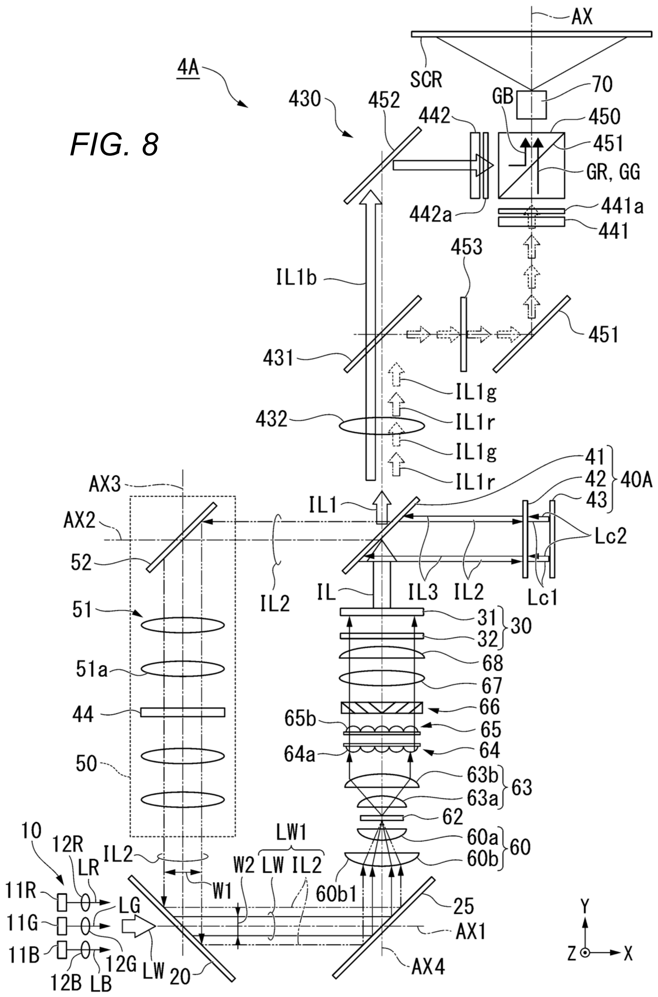

FIG. 8 shows the configuration of key parts of a projector 4A according to the present modification.

The light separator of the projector 4A according to the present modification has the light separator 40A shown in FIG. 2, as shown in FIG. 8.

The projector 4A according to the present modification, which uses the light separator 40A having a configuration different from that in the fourth embodiment, recycles the image non-generating light IL3 corresponding to the dark gradation component not used for image generation as the illumination light LW as in the fourth embodiment, so that the efficiency at which the illumination light LW output from the light source 10 is used can be increased.

Note that the technical scope of the present disclosure is not limited to the embodiments described above, and various changes can be made thereto without departing from the intent of the present disclosure.

In addition, the specific description of the shapes, the numbers, the arrangements, the materials, and other factors of the elements of the light source apparatus and the projector are not limited to those in the embodiments described above, and can be changed as appropriate.

For example, in the embodiments and modifications described above, the diffuser 62 is a transmissive diffuser by way of example, and may instead be a reflective diffuser. In the embodiments and modifications described above, the illumination light LW output from the light source 10 is P-polarized light with respect to the light combiner 20 by way of example, and may instead be S-polarized light with respect to the light combiner 20. In this case, the image non-generating light separated from the image modulated light by the light separator enters the light combiner 20 as P-polarized light.

The present disclosure will be summarized below as additional remarks.

### Additional Remark 1

A projector including:
a light source configured to output illumination light containing first color light in a first wavelength band and second color light in a second wavelength band different from the first wavelength band;
a light combiner onto which the illumination light output from the light source is incident;
a light modulator configured to modulate light incident from the light combiner to generate image modulated light;
a light separator configured to separate the image modulated light incident from the light modulator into image generating light used to generate an image and image non-generating light not used to generate the image;
an image forming unit configured to modulate the image generating light incident from the light separator to generate image light;
a projection optical apparatus configured to project the image light incident from the image forming unit;
a light guide system configured to guide the image non-generating light incident from the light separator to the light combiner; and
a polarization converter disposed in an optical path between the light combiner and the light modulator and configured to align polarization directions of the light incident from the light combiner,
wherein the illumination light output from the light source is light polarized in a first polarization direction with respect to the light combiner, and
the image non-generating light caused to be incident on the light combiner by the light guide system is light polarized in a second polarization direction perpendicular to the first polarization direction with respect to the light combiner, is combined with the illumination light incident from the light source at the light combiner, and is caused to be incident on the light modulator.

The thus configured projector, in which the light separator upstream from the image forming unit separates the image non-generating light corresponding to the dark gradation component not used to generate the image light in the image forming unit, can recycle the image non-generating light as the illumination light. The efficiency at which the illumination light output from the light source is used can therefore be increased. Furthermore, since the light modulator collectively modulates the multiple types of color light contained in the illumination light, the configuration of the projector can be simplified and reduced in size as compared with a case where light modulators are separately provided for the multiple types of color light. Moreover, in the present configuration, since the image non-generating light is separated from the image modulated light without using diffraction of light, the size and cost of the configuration of the projector can be reduced as compared with the related art, in which a spatial light modulator is used. In addition, diffraction loss due to zero-order light, a high-order diffraction image, and the like does not occur, so that the light use efficiency can be sufficiently increased.

### Additional Remark 2

The projector according to Additional Remark 1, wherein
the image forming unit includes
a color separator configured to separate the image generating light incident from the light separator into first image generating light in the first wavelength band and second image generating light in the second wavelength band,
a first liquid crystal panel configured to modulate the first image generating light incident from the color separator to generate first image light,
a second liquid crystal panel configured to modulate the second image generating light incident from the color separator to generate second image light, and
a light combining system configured to combine the first image light and the second image light.

The configuration described above can be a configuration in which the image non-generating light not used to generate the image light in the image forming unit including the two liquid crystal panels corresponding to the first color light and the second color light is recycled as the illumination light.

### Additional Remark 3

The projector according to Additional Remark 1, wherein
the image forming unit includes a micromirror-shaped light modulating element configured to generate the image modulated light in accordance with orientations of multiple micromirrors.

The configuration described above can be a configuration in which the image non-generating light not used to generate the image light in the image forming unit including the micromirror-shaped light modulating element is recycled as the illumination light.

### Additional Remark 4

The projector according to Additional Remark 1, wherein
the image forming unit includes
a micromirror-shaped first light modulating element configured to modulate first image generating light in the first wavelength band out of the image generating light incident from the light separator to generate first image light,
a micromirror-shaped second light modulating element configured to modulate second image generating light in the second wavelength band out of the image generating light incident from the light separator to generate second image light, and
a light combining prism configured to combine the first image light and the second image light.

The configuration described above can be a configuration in which the image non-generating light not used for image generation in the image forming unit including the two micromirror-shaped light modulating elements corresponding to the first color light and the second color light is recycled as the illumination light.

### Additional Remark 5

The projector according to Additional Remark 1, wherein
the light source is configured to output, as the illumination light, the first color light and the second color light in a time division manner and further output third color light in a third wavelength band different from the first wavelength band and the second wavelength band,
the light separator is configured to output first image generating light in the first wavelength band and second image generating light in the second wavelength band in a time division manner, and further output third image generating light in the third wavelength band, and
the image forming unit includes
a color separator configured to separate an optical path of the first image generating light or the second image generating light incident from the light separator from an optical path of the third image generating light,
a first liquid crystal panel configured to modulate the first image generating light and the second image generating light incident from the color separator in a time division manner to generate first image light and second image light, respectively,
a second liquid crystal panel configured to modulate the third image generating light incident from the color separator to generate third image light, and
an image light combiner configured to combine the light output from the first liquid crystal panel and the light output from the second liquid crystal panel.

The configuration described above can be a configuration in which image non-generating light not used for image generation in the image forming unit, which generates full-color image light containing RGB colors by using the two liquid crystal panels, is recycled as the illumination light.

### Additional Remark 6

The projector according to any one of Additional Remarks 2 to 5, wherein
the light separator includes
a polarization separator configured to reflect the image non-generating light and transmit the image generating light,
a retarder onto which the image non-generating light is incident from the polarization separator, and
a reflector configured to reflect the image non-generating light passing through the retarder toward the retarder, and
the image non-generating light reflected by the reflector and passing through the retarder is separated from the image generating light when passing through the polarization separator.

According to the configuration described above, which causes the image non-generating light to pass through the retarder twice, can change the polarization direction of the image non-generating light separated by the polarization separator. A configuration in which the polarization separator separates the image non-generating light and the image generating light from each other can therefore be realized.

### Additional Remark 7

The projector according to any one of Additional Remarks 1 to 6, wherein
a light incident surface of the light modulator and a light incident surface of the image forming unit are optically conjugate.

According to the configuration described above, the image generating light modulated by the light modulator can be efficiently incident on the light incident surface of the image forming unit.

### Additional Remark 8

The projector according to any one of Additional Remarks 1 to 7, wherein
a light incident surface of the light separator intersects with an optical axis of the image modulated light output from the light modulator.

According to the configuration described above, which, for example, transmits the image generating light and reflects the image non-generating light, the image generating light and the image non-generating light can be extracted in different directions. The image non-generating light can therefore be favorably separated from the image modulated light.

### Additional Remark 9

The projector according to any one of Additional Remarks 1 to 8, further including:
a first optical system disposed in an optical path between the light combiner and the polarization converter and configured to collect the light incident from the light combiner;
a diffuser onto which the light collected by the first optical system is incident; and
a second optical system configured to parallelize the light diffused by the diffuser.

According to the configuration described above, even when coherent light is used as the illumination light, speckle noise generated by the illumination light can be reduced by diffusing the coherent light with the diffuser.

### Additional Remark 10

The projector according to Additional Remark 9, further including:
a first lens array and a second lens array onto which the light parallelized by the second optical system is incident; and
a superimposing lens configured to superimpose beams output from the second lens array on one another at the light modulator.

According to the configuration described above, the uniformity of the illuminance distribution of the illumination light incident on the light modulator can be increased.

### Additional Remark 11

The projector according to Additional Remark 9 or 10, wherein
the light guide system includes a relay optical system including multiple relay lenses, and
the relay optical system is configured to bring light output from an image formation region in the light modulator where the image modulated light is generated into focus at a light incident surface of the first optical system.

According to the configuration described above, the image non-generating light output from the image formation region of the light modulator and traveling via the light separator and the light combiner is allowed to efficiently enter the first optical system.

### Additional Remark 12

The projector according to any one of Additional Remarks 1 to 11, wherein
the light guide system includes a rod lens.

According to the configuration described above, in which the image non-generating light propagates while repeatedly reflected in the rod lens, the image non-generating light is allowed to have a uniform in-plane intensity distribution and exit via the light exiting surface of the rod lens.

### Additional Remark 13

The projector according to any one of Additional Remarks 1 to 12, wherein
the light source includes a multimode-oscillation laser light emitter.

The configuration described above can suppress generation of speckle noise while providing an intense output as compared with a configuration using single-mode-oscillation laser light emitters.

## Claims

1. A projector comprising:
a light source configured to output illumination light containing first color light in a first wavelength band and second color light in a second wavelength band different from the first wavelength band;
a light combiner onto which the illumination light output from the light source is incident;
a light modulator configured to modulate light incident from the light combiner to generate image modulated light;
a light separator configured to separate the image modulated light incident from the light modulator into image generating light used to generate an image and image non-generating light not used to generate the image;
an image forming unit configured to modulate the image generating light incident from the light separator to generate image light;
a projection optical apparatus configured to project the image light incident from the image forming unit;
a light guide system configured to guide the image non-generating light incident from the light separator to the light combiner; and
a polarization converter disposed in an optical path between the light combiner and the light modulator and configured to align polarization directions of the light incident from the light combiner,
wherein the illumination light output from the light source is light polarized in a first polarization direction with respect to the light combiner, and
the image non-generating light caused to be incident on the light combiner by the light guide system is light polarized in a second polarization direction perpendicular to the first polarization direction with respect to the light combiner, is combined with the illumination light incident from the light source at the light combiner, and is caused to be incident on the light modulator.

2. The projector according to claim 1, wherein
the image forming unit includes
a color separator configured to separate the image generating light incident from the light separator into first image generating light in the first wavelength band and second image generating light in the second wavelength band,
a first liquid crystal panel configured to modulate the first image generating light incident from the color separator to generate first image light,
a second liquid crystal panel configured to modulate the second image generating light incident from the color separator to generate second image light, and
a light combining system configured to combine the first image light and the second image light.

3. The projector according to claim 1, wherein
the image forming unit includes a micromirror-shaped light modulating element configured to generate the image modulated light in accordance with orientations of multiple micromirrors.

4. The projector according to claim 1, wherein
the image forming unit includes
a micromirror-shaped first light modulating element configured to modulate first image generating light in the first wavelength band out of the image generating light incident from the light separator to generate first image light,
a micromirror-shaped second light modulating element configured to modulate second image generating light in the second wavelength band out of the image generating light incident from the light separator to generate second image light, and
a light combining prism configured to combine the first image light and the second image light.

5. The projector according to claim 1, wherein
the light source is configured to output, as the illumination light, the first color light and the second color light in a time division manner and further output third color light in a third wavelength band different from the first wavelength band and the second wavelength band,
the light separator is configured to output first image generating light in the first wavelength band and second image generating light in the second wavelength band in a time division manner, and further output third image generating light in the third wavelength band, and
the image forming unit includes
a color separator configured to separate an optical path of the first image generating light or the second image generating light incident from the light separator from an optical path of the third image generating light,
a first liquid crystal panel configured to modulate the first image generating light and the second image generating light incident from the color separator in a time division manner to generate first image light and second image light, respectively,
a second liquid crystal panel configured to modulate the third image generating light incident from the color separator to generate third image light, and
an image light combiner configured to combine the light output from the first liquid crystal panel and the light output from the second liquid crystal panel.

6. The projector according to claim 2, wherein
the light separator includes
a polarization separator configured to reflect the image non-generating light and transmit the image generating light,
a retarder onto which the image non-generating light is incident from the polarization separator, and
a reflector configured to reflect the image non-generating light passing through the retarder toward the retarder, and
the image non-generating light reflected by the reflector and passing through the retarder is separated from the image generating light when passing through the polarization separator.

7. The projector according to claim 1, wherein
a light incident surface of the light modulator and a light incident surface of the image forming unit are optically conjugate.

8. The projector according to claim 1, wherein
a light incident surface of the light separator intersects with an optical axis of the image modulated light output from the light modulator.

9. The projector according to claim 1, further comprising:
a first optical system disposed in an optical path between the light combiner and the polarization converter and configured to collect the light incident from the light combiner;
a diffuser onto which the light collected by the first optical system is incident; and
a second optical system configured to parallelize the light diffused by the diffuser.

10. The projector according to claim 9, further comprising:
a first lens array and a second lens array onto which the light parallelized by the second optical system is incident; and
a superimposing lens configured to superimpose beams output from the second lens array on one another at the light modulator.

11. The projector according to claim 9, wherein
the light guide system includes a relay optical system including multiple relay lenses, and
the relay optical system is configured to bring light output from an image formation region in the light modulator where the image modulated light is generated into focus at a light incident surface of the first optical system.

12. The projector according to claim 1, wherein
the light guide system includes a rod lens.

13. The projector according to claim 1, wherein
the light source includes a multimode-oscillation laser light emitter.
